**Europäisches Patentamt**

**European Patent Office**

**Office européen des brevets**

(19)

(11) Publication number : **0 381 479 B1**

(12) # EUROPEAN PATENT SPECIFICATION

(45) Date of publication of patent specification : **26.10.94 Bulletin 94/43**

(51) Int. Cl.⁵ : **G09G 3/30**

(21) Application number : **90301018.9**

(22) Date of filing : **31.01.90**

(54) **Method and apparatus for driving capacitive display device.**

(30) Priority : **31.01.89 JP 23394/89**

(43) Date of publication of application :
**08.08.90 Bulletin 90/32**

(45) Publication of the grant of the patent :
**26.10.94 Bulletin 94/43**

(84) Designated Contracting States :
**DE GB**

(56) References cited :
**EP-A- 0 016 926**
**US-A- 4 353 062**

(73) Proprietor : **SHARP KABUSHIKI KAISHA**
**22-22 Nagaike-cho**
**Abeno-ku**
**Osaka 545 (JP)**

(72) Inventor : **Ogawa, Ikuo**
**1-2-50-501, Ukyo 2-chome**
**Nara-shi, Nara-ken (JP)**
Inventor : **Inohara, Akio**
**2-3-1105,**
**Taishibashi 3-chome,**
**Asahi-ku**
**Osaka-shi, Osaka-fu (JP)**
Inventor : **Ohba, Toshihiro**
**182-7, Kodonocho**
**Nara-shi, Nara-ken (JP)**
Inventor : **Kishishita, Hiroshi**
**12-5, Jingu 5-chome**
**Nara-shi, Nara-ken (JP)**
Inventor : **Uede, Hisashi**
**37 Honmachi 2-chome**
**Wakayama-shi, Wakayama-ken (JP)**

(74) Representative : **Brown, Kenneth Richard et al**
**R.G.C. Jenkins & Co.**
**26 Caxton Street**
**London SW1H 0RJ (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method and apparatus for driving a capacitive display device such as an electro luminescent (EL) display device or a plasma display device.

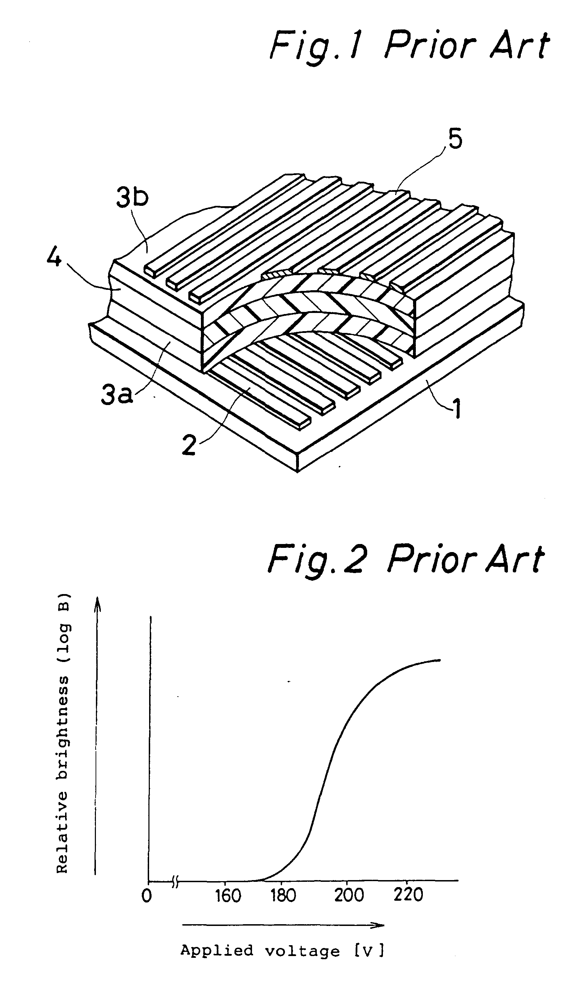

For example, referring to Figure 1, a double insulation type (or triple layer) thin film EL element is composed as follows. Transparent strip electrodes 2 made of $In_2O_3$ are formed in parallel on a glass substrate 1, and a dielectric substance layer 3a of $Y_2O_3$, $Si_3N_4$, $TiO_2$, $Al_2O_3$ or the like, an EL substance layer 4 made of ZnS doped with an activator such as Mn, and a dielectric substance layer 3b of $Y_2O_3$, $Si_3N_4$, $TiO_2$, $Al_2O_3$ or the like are laminated sequentially thereon in a film thickness of 500 to 10,000 Å by a thin film forming technique such as an evaporation and sputtering method to form a triple layer structure, and strip electrodes 5 made of Al (aluminium) are formed in parallel thereon in an orthogonal direction to the transparent electrodes 2.

As the thin film EL element has the EL substance 4 held between the dielectric layers 3a and 3b placed between the electrodes 2 and 5, it may be regarded as a capacitive element from the viewpoint of an equivalent circuit. The thin film EL element is driven by applying a relatively high voltage of about 200V. The brightness-voltage characteristic is shown in Figure 2. The thin film EL element has such a characteristic that it emits light of high brightness when an AC electric field is applied, as well as having a long durability.

In a display device using such a thin film EL element as its display panel, the transparent electrodes 2 and back electrodes 5 are used as one or the other set of data electrodes and scanning electrodes. A modulation voltage corresponding to the display data is applied to the data electrodes. On the other hand, a writing voltage is applied line-sequentially to the scanning electrodes.

By this drive, a superposing effect or a cancelling effect of the writing voltage and the modulation voltage occurs at each pixel defined by a data electrode-scanning electrode intersection. The level of the driving voltage substantially applied to the pixel relative to an emission threshold determines whether the pixel is set in an emission state or a non-emission state, thereby obtaining a specified image display.

Conventionally, in such a display apparatus, a gradation display may be achieved by varying the brightness of each pixel in plural steps. Two methods are known: a pulse width modulation method, in which the width of the pulse of the modulation voltage applied to the data electrodes is varied according to the desired gradation display data; and an amplitude modulation method, in which the amplitude of the modulation voltage is varied according to the desired gradation display data.

In the pulse width modulation method, for the purpose of easy and constant gradation display, there is known a method of using a ramp voltage as the modulation voltage applied to the data electrodes or as the writing voltage applied to the scanning electrodes. By the term "ramp voltage" is meant a voltage whose level gradually increases or decreases as time passes.

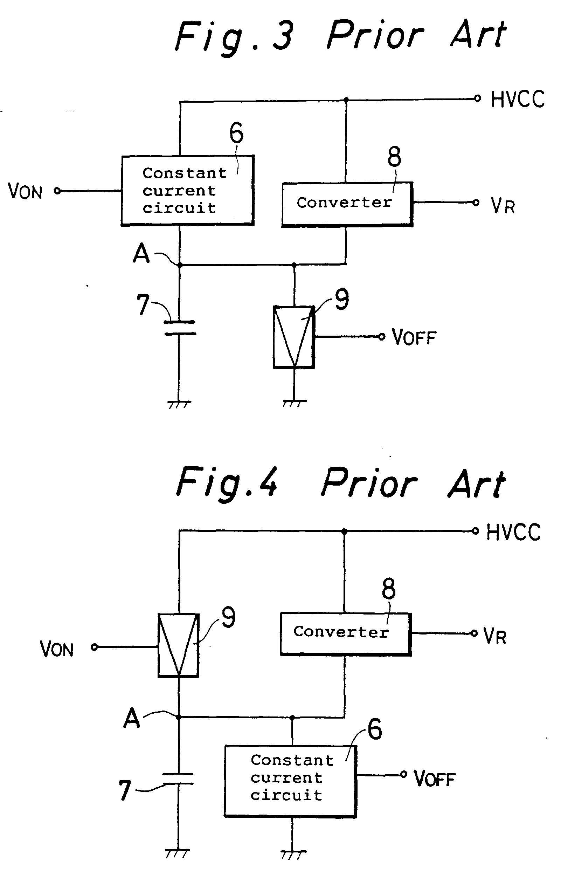

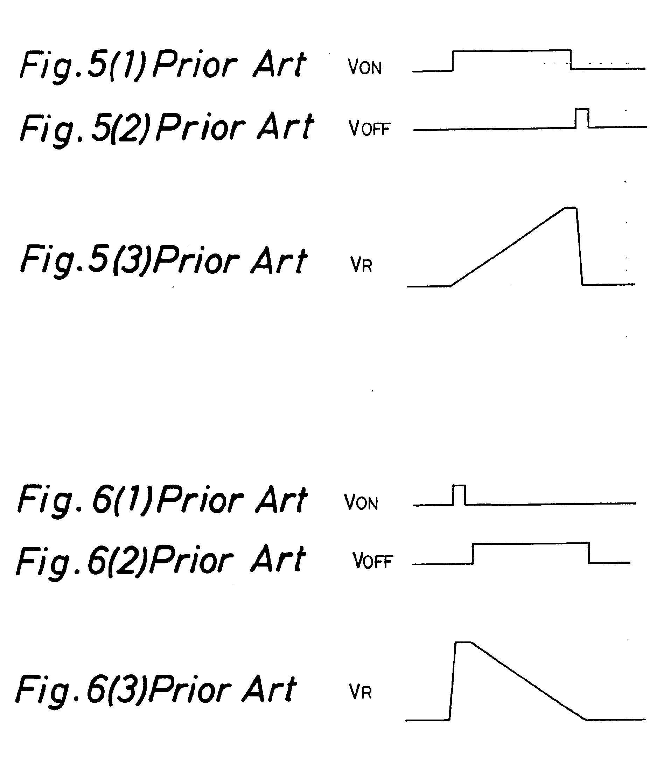

Figures 3 and 4 show respective circuit arrangements for generating the ramp voltage. Figures 5 and 6 are timing charts showing the operation of the circuits in Figure 3 and Figure 4 respectively.

In the ramp voltage generating circuit shown in Figure 3, a constant current circuit 6 receives a starting signal $V_{ON}$ of the ramp voltage from outside and supplies constant electric current. The circuit 6 is connected to one of the terminals of a capacitor 7 as well as to a power source HVCC. The other terminal of the capacitor 7 is grounded. A converter 8 outputs the ramp voltage $V_R$ corresponding to the charging voltage of capacitor 7 as it receives the charging voltage. The converter 8 is connected to a connecting point A of the constant current circuit 6 and the capacitor 7 as well as to the power source HVCC. In addition, between the connecting point A and the ground, there is connected a switch circuit 9 which switches to an ON state as it receives the terminating signal $V_{OFF}$ of the ramp voltage from outside.

In this ramp voltage generating circuit, when the signal $V_{ON}$ of the ramp voltage shown in Figure 5(1) is applied, the constant current circuit 6 comes to be in an ON state and a constant current starts to flow in the capacitor 7 through the constant current circuit 6 from the power source HVCC. The charging voltage of the capacitor 7 thus increases at a specified gradient as time passes. When a specified time has passed and the start signal $V_{ON}$ of the ramp voltage is discontinued, the constant current circuit 6 comes to be in an OFF state, and the charging of the capacitor 7 is terminated. Succeedingly, when the terminating signal $V_{OFF}$ of the ramp voltage shown in Figure 5 (2) is applied, the switch circuit 9 switches to its conductive ON state, the capacitor 7 starts discharging through the switch circuit 9, and the charging voltage of the capacitor 7 remarkably decreases. From the converter 8 there is output the ramp voltage $V_R$ shown in Figure 5(3), which corresponds to the change in the charging voltage of the capacitor 7.

In the ramp voltage generating circuit shown in Figure 4, the positions of the constant current circuit 6 and the switch circuit 9 in Figure 3 are reversed. When the starting signal $V_{ON}$ of the ramp voltage shown in Figure 6(1) is applied, the switch circuit 9 switches to the ON state, and the capacitor 7 is charged through this switch circuit 9 from the power source HVCC. The charging voltage of the capacitor 7 rapidly increases to the voltage of the power source HVCC.

After the starting signal $V_{ON}$ of the ramp voltage is discontinued and the switch circuit 9 is switched OFF, when the terminating signal $V_{OFF}$ of the ramp voltage shown in Figure 6(2) is applied, the constant current circuit 6 comes to be in an ON state. A constant electric current starts to be supplied from the capacitor 7 through the constant current circuit 6 to the ground, and the charging voltage of the capacitor 7 rapidly decreases at a specified gradient as times passes. From the converter 8, there is output the ramp voltage $V_R$ shown in Figure 6(3), which corresponds to the change in the charging voltage of the capacitor 7.

However, in the case of obtaining the ramp voltage $V_R$ by charging and discharging of the capacitor 7 as described herein above, since the gradient of the ramp voltage $V_R$ is determined, for example, by the resistance value of the constant current circuit 6 and the capacitance of the capacitor 7, the reproducibility of the waveform of the obtained ramp voltage $V_R$ is poor due to the differences in characteristics of circuit elements such as transistors, resistors and capacitors making up the ramp voltage generating circuit. Moreover, there is another problem in that, due to the differences in timings for applying the starting signal $V_{ON}$ of the ramp voltage and the terminating signal $V_{OFF}$ of the ramp voltage, the achievable voltage of the ramp voltage $V_R$ also varies.

It is hence a primary object of the invention to present a method and apparatus for driving a display device which enables a superior reproducibility of the voltage waveform applied to the pixels thereof and a stable gradation display in driving a capacitive display device.

In one aspect, the invention provides a method for driving a display device comprising a dielectric display material disposed between two opposed sets of electrodes, the display device having an array of display elements each defined by the intersection of a pair of opposed electrodes comprising one from each set, the method comprising applying, across the pair of opposed electrodes of each display element, a driving pulse signal voltage whose amplitude exceeds the display threshold voltage of the dielectric display material and changes with time in a stepwise manner, and whose width is set according to a desired display gradation of said display element.

In an embodiment, the stepwise change in amplitude of the driving pulse signal is provided by a staircase wave which is generated by (i) counting a clock signal, (ii) converting the count to an analogue signal, and (iii) converting the analogue signal to a level which is suitable for application to the electrodes of the display device.

The count may be processed prior to conversion to the analogue voltage to vary the rate of change of voltage of the staircase wave in a predetermined manner. This feature permits the brightness level of the emitted light to be adjusted to be equally divided in consideration of the sight characteristics of the human eye for the purpose of gradation display.

The width of the driving pulse signal may be set by counting the clock signal.

In preferred embodiments, the display elements are driven by a modulation signal applied sequentially to each of a plurality of data electrodes constituting one of said sets of electrodes and by a writing signal applied to a plurality of scanning electrodes constituting the other of said sets of electrodes, the modulation signal comprising a pulse whose width determines the width of the driving pulse signal, and one or the other of the modulation signal and the writing signal comprising a staircase wave which provides the stepwise change in amplitude of the driving pulse signal.

The modulation signal applied to said data electrodes may comprise said staircase wave.

Alternatively, the writing signal applied to said scanning electrodes may comprise said staircase wave.

In another aspect, the invention provides apparatus for driving a display device comprising a dielectric display material disposed between two opposed sets of electrodes, the display device having an array of display elements each defined by the intersection of a pair of opposed electrodes comprising one from each set, the apparatus comprising means for generating, across the pair of opposed electrodes of each display element, a driving pulse signal voltage whose amplitude exceeds the display threshold voltage of the dielectric display material and changes with time in a stepwise manner, and whose width is set according to input data defining a desired display gradation of said display element.

In an embodiment, the driving pulse signal generating means includes a circuit for generating a staircase wave which provides the stepwise change in amplitude of the driving pulse signal, said circuit comprising a counter for counting a clock signal, a D-A converter for converting the count to an analogue signal, and a converter for converting the analogue signal to a level which is suitable for application to the electrodes of the display device.

The staircase wave generating circuit may further comprise a conversion circuit, connected between the output of the counter and the input of the D-A converter, for determining the rate of change of voltage of the staircase wave.

The conversion circuit may have a memory function by which data having a predetermined relationship with the input count are output to the D-A converter.

In preferred embodiments, the driving pulse signal generating means comprises:
a scanning electrode driving circuit for generating a writing signal to be applied sequentially to each of a plurality of scanning electrodes constituting one of said sets of electrodes;

a data electrode driving circuit for generating a modulation signal to be applied to each of a plurality of data electrodes constituting the other of said sets of electrodes, said modulation signal comprising a pulse whose width determines the width of the driving pulse signal; and

a staircase wave generating circuit included in one or the other of said scanning electrode driving circuit and said data electrode driving circuit for generating a staircase wave in said writing signal or in said modulation signal respectively to provide the stepwise change in amplitude of the driving pulse signal.

Preferably, the staircase wave generating circuit generates a staircase wave whose steps are synchronised with a clock signal, said data electrode driving circuit including means for counting said clock signal to determine the pulse width of the modulation signal.

In preferred embodiments, the data electrode driving circuit comprises:

a circuit for extracting the input data relating to the desired display gradation of the display elements defined by the intersection of a selected scanning electrode and each of the data electrodes;

a comparator for comparing, in respect of each of those display elements, the input data and the output signal of said counting means, to determine the pulse width of the modulation signal to be applied to each data electrode; and

a modulation signal forming circuit for forming and supplying to each data electrode a respective modulation signal having the required pulse width.

In one embodiment, the staircase wave generating circuit is included in said data electrode driving circuit, and said modulation signal forming circuit forms each said respective modulation signal by outputting the staircase wave for a time determined by the output of said comparator.

In another embodiment, the staircase wave generating circuit is included in said scanning electrode driving circuit, and said modulation signal forming circuit forms each said respective modulation signal by outputting a predetermined voltage for a time determined by the output of said comparator.

According to the invention, since a voltage having a waveform of whose level changes in steps is applied to the data electrodes or the scanning electrodes as a modulation voltage or a writing voltage, the reproducibility of the waveforms of the modulation voltage or the writing voltage is not deteriorated due to differences in the characteristics of circuit elements. In addition, since the differences in starting timings and terminating timings of the modulation voltage or the writing voltage do not affect the achievable voltage, the reproducibility of voltage waveforms applied to the display elements (pixels) is improved, and the gradation display comes to be stable.

Some preferred embodiments of the invention will now be described in detail, by way of example only, with reference to the accompanying drawings.

Figure 1 is a partially cut-away perspective view of a thin film EL element.

Figure 2 is a diagram showing a relative brightness-applied voltage characteristic of a thin film EL element.

Figure 3 is a block diagram schematically showing the configuration of an exemplary conventional ramp voltage generating circuit.

Figure 4 is a block diagram schematically showing the configuration of another exemplary conventional ramp voltage generating circuit.

Figure 5 is a timing chart relating to the operation of the ramp voltage generating circuit in Figure 3.

Figure 6 is a timing chart relating to the operation of the ramp voltage generating circuit in Figure 4.

Figure 7 is a block diagram showing the basic composition of a display apparatus.

Figure 8 is a block diagram showing the basic composition of a staircase wave generating circuit of one of the embodiments of the invention.

Figure 9 is a timing chart showing the operation of the staircase wave generating circuit in Figure 8.

Figure 10 is a block diagram showing the composition of a display apparatus 30 of one of the embodiments of the invention.

Figure 11 is a timing chart showing the operation of setting a gradation width of the display apparatus 30.

Figure 12 is a waveform diagram showing voltages applied to the display apparatus 30 in gradation display drive.

Figure 13 is a waveform diagram explaining the current flowing in a light-emitting layer.

Figure 14 is a block diagram showing the composition of a display apparatus 31 of another embodiment of the invention.

Figure 15 is a waveform diagram showing voltages applied to the display apparatus 31 in gradation display drive.

Figure 16 is a block diagram showing the composition of another example of a staircase wave generating circuit.

Figure 17 is a timing chart showing the operation of the staircase wave generating circuit in Figure 16.

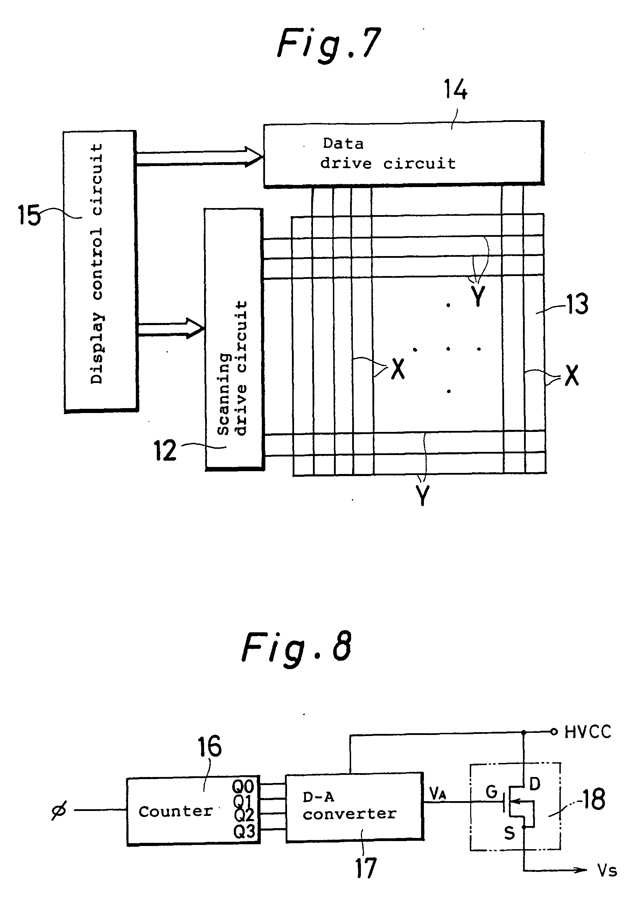

Figure 7 is a block diagram showing the basic composition of a display apparatus. Scanning electrodes Y of a display panel 13 are connected to a scanning electrode driving circuit 12. On the other hand, data electrodes X of the display panel are connected to a data electrode driving circuit 14. To the scanning electrode driving circuit 12 and the data electrode driving circuit 14, a display control circuit 15 is connected, which controls the operation of the circuits 12 and 14.

The data electrode driving circuit 14 has a function that can set the pulse width of a modulation voltage applied to each data electrode X according to gradation display data supplied from the display control circuit 15. The scanning electrode driving circuit 12 has a function of applying a writing voltage to the scanning electrodes Y in a line-sequential manner.

Figure 8 is a block diagram showing the basic composition of a staircase wave generating circuit for generating a staircase wave voltage $V_S$. A counter 16 counts a clock signal $\phi$ for gradation supplied from the display control circuit 15. The counter 16 has a function to output the counted value as, for example, binary codes Q3, Q2, Q1, Q0 of four bits.

In the stage following the counter 16 there is a digital-to-analogue converter (D-A converter) 17 for converting the outputs Q3, Q2, Q1, Q0 of four bits into an analogue signal, that is, voltage $V_A$. A power source HVCC is supplied to this D-A converter 17. The output $V_A$ from the D-A converter 17 is converted to a staircase wave voltage $V_S$ by a converter 18, which is also supplied by the power source HVCC.

The converter 18 is realised by a MOS transistor of P-channel type, for example, as shown in Figure 8. The output terminal of the D-A converter 17 is connected to the gate G of this transistor, the drain D is supplied by the power source HVCC, and the source S is connected to the output stage of the aforementioned data electrode driving circuit 14 or the scanning electrode driving circuit 12 (see Figure 7).

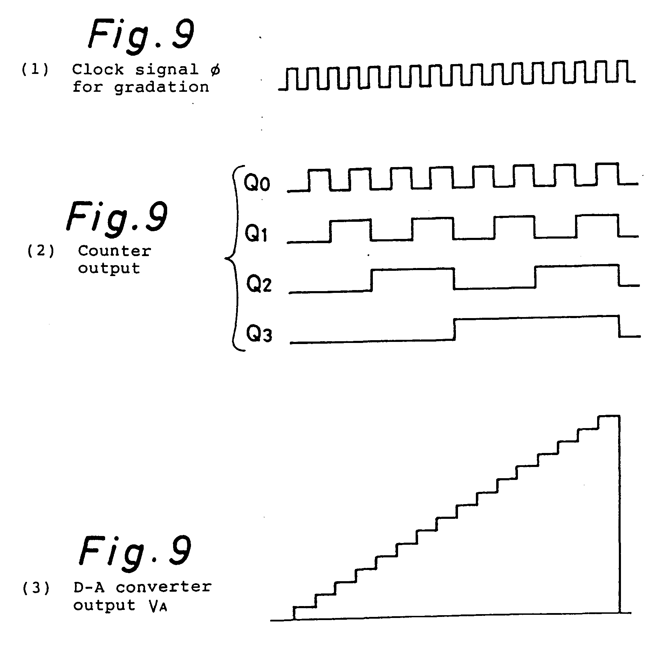

Figure 9 is a timing chart showing the operation of the staircase wave generating circuit. In the case that the staircase wave voltage $V_S$ is supplied to the output stage of the data electrode driving circuit 14 shown in Figure 7, when the application of the writing voltage - $V_W$ (= $V_{th}$, where $V_{th}$ is a threshold voltage of emission) is started to one scanning electrode Y chosen by the scanning electrode driving circuit 12, the counter 16 of the staircase wave generating circuit shown in Figure 8 simultaneously starts counting the clock signals $\phi$ (see Figure 9(1)) for gradation. Thereby, the clock signals $\phi$ for gradation are divided into the output waveforms Q0 to Q3 shown in Figure 9(2). The outputs Q3, Q2, Q1, Q0 are the counted values of the clock signals $\phi$ for gradation express by binary codes of four bits. From the D-A converter 17 to which the four-bit data is input there is output a voltage $V_A$ having a level corresponding to the input data.

In other words, as shown in Figure 9 (3), the output voltage $V_A$ of the D-A converter 17 has a stepped waveform the level of which increases by one step every time the counter 16 counts a clock signal $\phi$ for gradation. Therefore, the voltage $V_S$ output from the source S of the P-channel MOS transistor 18 of the succeeding stage which receives the output voltage $V_A$ as a gate voltage changes also according to the voltage $V_A$. In this way, the output voltage $V_S$ can be obtained as a similar staircase wave to the voltage $V_A$

(neglecting the reduction in voltage between the gate and the source of the transistor 18). The P-channel MOS transistor 18 should have a sufficient capacity for supplying electricity, and the output voltage $V_S$ of the source S should not change through the load of the succeeding stage.

In the case that the staircase wave voltage $V_S$ obtained in such manner is supplied to the output stage of the data electrode driving circuit 14, it is applied to the data electrodes X as a modulation voltage $V_M$. On the other hand, in the case that it is supplied to the output stage of the scanning electrode driving circuit 12, for example, the staircase wave voltage $V_S$ is superposed on the writing voltage - $V_W$ and is applied to the scanning electrodes Y.

Theoretically, by using the staircase wave voltage $V_S$ as the power source for the data electrode driving circuit 14 and setting the gradation display data supplied by the display control circuit 15 (see Figure 7) in correspondence with each data electrode X as a load value of the counter 16, when the counting value reaches the load value of the gradation display data, the counter 16 is cleared, and then, the staircase voltage $V_S$ is lowered as well. Thus, the staircase wave voltage $V_S$ with a pulse width corresponding to the gradation display data is applied to the data electrodes X from the data electrode driving circuit 14 as a modulation voltage $V_M$.

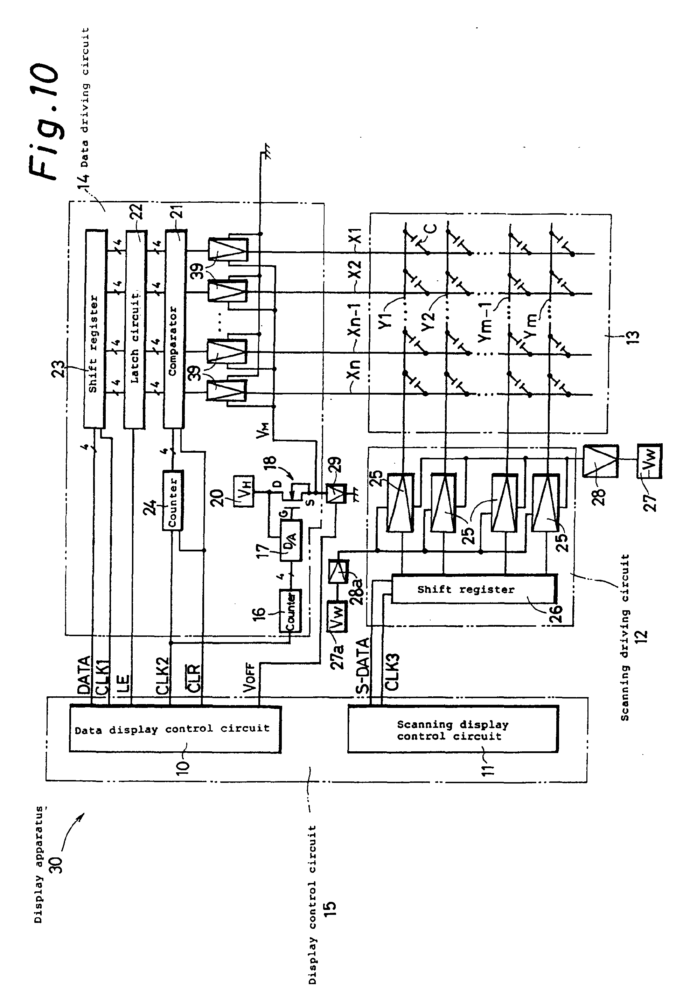

Figure 10 is a block diagram showing the composition of a display apparatus 30 of the present embodiment of the invention. In the embodiment, the staircase wave generating circuit is composed as a part of the data electrode driving circuit 14, and the back edge of the staircase wave voltage $V_S$ obtained is set by cutting off the staircase according to the gradation display data DATA. The display device 30 is, for example, an EL display device, and the EL display panel 13 is composed of, for example, thin film EL (electroluminescent) elements of double insulated type (see Figure 1).

Meanwhile, each pixel in the display panel 13 is expressed equivalently as a capacitor C. The plurality of data electrodes X1, X2, ... Xn-1, Xn (expressed by a reference sign X in general) are connected to the data electrode driving circuit 14. The plurality of scanning electrodes Y1, Y2, ... Ym-1, Ym (expressed by a reference sign Y in general), and aligned in a direction so as to mutually cross the data electrodes X1 to Xn, are connected to the scanning electrode driving circuit 12.

In the scanning electrode driving circuit 12, the outputs of an output port 25 are connected individually to the respective ones of the scanning electrodes Y1 to Ym. Through the output port 25, a writing voltage - $V_W$ is selectively applied to the scanning electrodes Y1 to Ym from a power source circuit 27 via a driver 28. A shifter register 26 is connected to each output port 25. Synchronised with the clock signal CLK3 from a scanning display control circuit 11, a scanning data signal S-DAT, which designates the scanning electrodes Y1 to Ym in a line-sequential manner, is transmitted to the shift register 26. In this way, each output port 25 comes to be in an ON state in the line-sequence of the scanning electrodes Y1 to Ym.

On the other hand, in the data electrode driving circuit 14, the outputs of an output port 39 are connected individually to respective ones of the data electrodes X1 to Xn. Through the output port 39, a modulation voltage $V_M$ is applied to the data electrodes X1 to Xn from a power source circuit 20 via a transistor 18. In addition, according to the setting state of the output port 39, the data electrodes X1 to Xn are clamped to ground.

These output ports 39 are connected to a comparator 21. This comparator 21 is connected to a shift register 23 through a latch circuit 22. The shift register 23 shifts the gradation display data DATA signal input in synchronisation with the clock signal CLK1 from a data display control circuit 10, and transmits, for example, a gradation display data DATA expressed by parallel data of four bits in correspondence with each of the data electrodes X1 to Xn. After being transmitted by the shift register 23, the gradation display data DATA is latched in the latch circuit 22 according to the latch signal LE from the data display control circuit 10 and supplied to the comparator 21.

The comparator 21 compares the parallel data of four bits supplied from the counter 24 with the gradation display DATA supplied from the latch circuit 22, and functions to determine the pulse width of the modulation voltage $V_M$ corresponding to the gradation display data DATA.

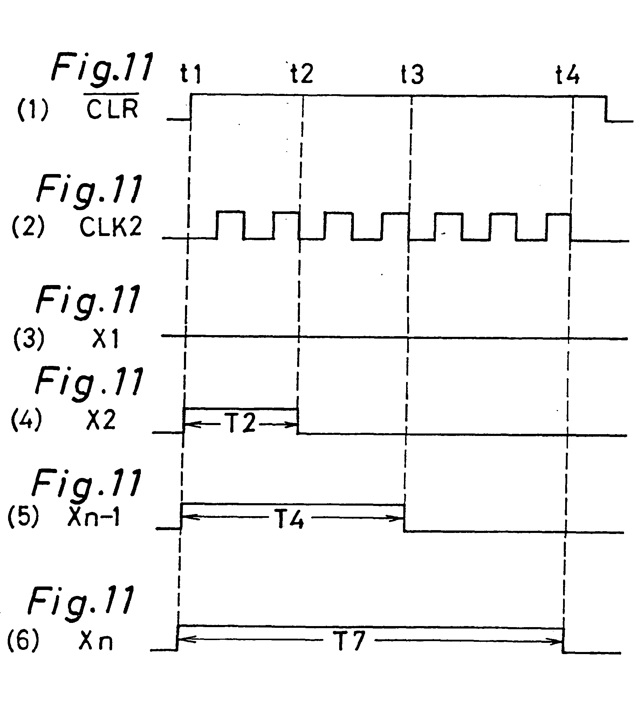

Figure 11 is a timing chart showing the basic operation of the EL display apparatus 30 shown in Figure 10. To the shift register 23 of the data driving circuit 14, the gradation display data DATA is transmitted in the form of a binary code of four bits in synchronisation with the clock signal CLK1. The gradation display data DATA in four bits is temporarily held in the latch circuit 22. In such a state, in the case that a clear signal $\overline{CLR}$ remaining as the input to the comparator 21 and the counter 24 is released at a time t1, as shown in Figure 11(1), the data electrode X corresponding to data "0" out of the gradation display data held in the latch circuit 22 is clamped to ground; the data electrodes X corresponding to the other data are all drawn to the modulation voltage $V_M$.

For example, suppose that gradation display data "0", "2", "4", "7" are supplied to the output ports 39 corresponding to the data electrodes X1, X2, Xn-1, $X_n$ respectively of the data electrode driving circuit 14. In this case, the output port 39 of the data electrode X1 is clamped to ground simultaneously with the release of the clear signal $\overline{CLR}$, and the waveform released to data electrode X1 comes to have the shape shown in Figure 11(3). In other words, the gradation width is set at zero.

In the output port 39 of the data electrode X2, the counted value of the clock signal CLK2 (see Figure 11(2)) counted by the counter 24 is compared with the gradation display data "2" by the comparator 21. At a timing (time t2) when the counted value comes to be "2", it is clamped to ground and a gradation width T2 of the waveform shown in Figure 11(4) is set.

Similarly, the output port 39 of the data electrode Xn-1 is clamped to ground at a time (time t3) when the counted value of the counter 24 comes to be "4", and a gradation width T4 of the waveform shown in Figure 11(5) is set.

With regard to the output port 39 of the data electrode Xn, it is clamped to ground as well at the timing (time t4) when the counted value of the counter 24 comes to be "7", and a gradation width T7 of the waveform shown in Figure 11(6) is set.

Therefore, the modulation voltage $V_M$ with a pulse width equivalent to the gradation display data "0", "2", "4", "7" is applied to each of the data electrodes X1, X2, Xn-1 and Xn, respectively.

On the other hand, in the scanning electrode driving circuit 12, while the clear signal $\overline{CLR}$ is released to the data electrode driving circuit 14, only one of all the output ports 25 comes to be in an ON state, and the writing voltage - $V_W$ is applied only to the one scanning electrode Y correspondingly selected.

By a succession of the aforementioned actions in accordance with the line sequence of the scanning electrodes Y, pixels positioned on each scanning electrode Y emit light of a brightness corresponding to the gradation display data DATA, or stop the emission of light. Therefore, as a whole, an image with a gradation in brightness is displayed.

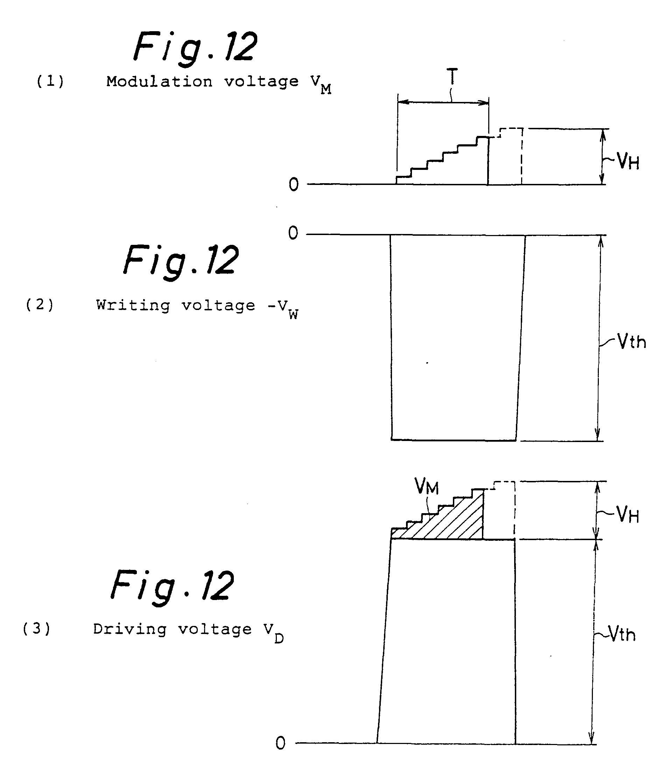

A driving voltage $V_D$ applied to the pixel defined by the crossing of the scanning electrode Y to which the writing voltage - $V_W$ is applied and the data electrode X to which the modulation voltage $V_M$ is applied comes to have a waveform shown in Figure 12(3) when the scanning electrode Y is selected.

In the waveform of the driving voltage $V_D$, the shaped area exceeding the emission threshold voltage $V_{th}$ corresponds to the part where the modulation voltage $V_M$ in steps shown in Figure 12(1) is superposed on the writing voltage - $V_W$ (= $-V_{th}$); thus, the pixels emit light of a brightness according to the gradation display data. The modulation voltage $V_M$ has a pulse width T according to the gradation display data DATA, and as shown in Figure 12(1), it can be changed up to the highest level VH allowed by the output voltage from the power source circuit 20 in Figure 10.

As apparent from the waveform of the driving voltage $V_D$ shown in Figure 12(3), with this driving method the modulation voltage $V_M$ increases in steps which are synchronised with the clock signal CLK2 for gradation. Since, in the period of one step, the timing for cutting off the modulation voltage $V_M$ is also determined by the gradation width T determined in accordance to the counter 24 counting in synchronisation with the clock signal CLK2, achievable voltages of the driving voltage $V_D$ never vary. Moreover, since a ramp waveform produced by charging and discharging of a capacitor is not used as the modulation voltage $V_M$, differences in levels of the modulation voltage $V_M$ (variation of $dV_D/dt$ of a ramp waveform) caused by the differences in characteristics of the elements composing the circuit do not occur as they do in the case of a ramp waveform, the modulation voltage $V_M$ comes to be stable, and therefore, a stable gradation display can be realised.

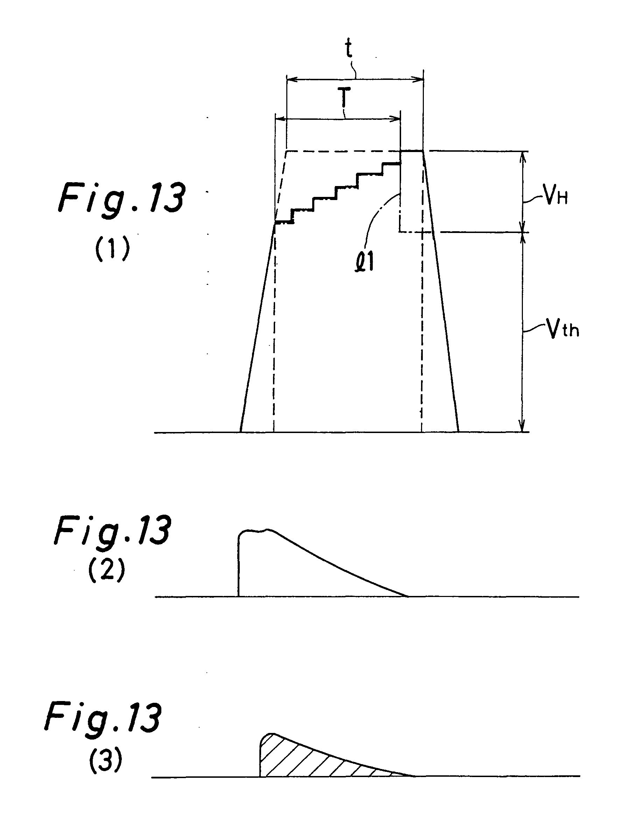

In the case that the driving voltage $V_D$ applied to the corresponding pixels has such a waveform as shown by a solid line in Figure 13(1), the waveform of the electric current of the power source, as shown in Figure 13(2), comes to have a longer feed time after the driving voltage $V_D$ comes to be at the emission threshold voltage $V_{th}$ or higher voltages. Moreover, the driving voltage $V_D$ is not a square wave, and as it comes to have such a waveform that the writing voltage $V_W$ of a square wave and a modulation voltage $V_M$ having waveform in steps are superposed, the electric current of the power source smoothly reduces without there being a peak current.

Such tendency is directly reflected in the electric current flowing in the emission layer of the pixel, and, as shown in Figure 13(3), the waveform of the electric current is controlled to have a lower peak value and smoothly reduces to have a waveform with a longer feed time.

On the other hand, by setting the pulse width of the modulation voltage $V_M$ in steps at a shorter width dividing it into some steps as shown by a single-dotted broken line l1 in Figure 13(1), the feed time of the electric current flowing in the emission layer of the pixel shown in Figure 13(3) can be also shortened.

Generally, the brightness level of the light emitted from an emission layer such as an EL substance is proportional to the level of the electric current flowing in the emission layer and the length of the feed time. Therefore, in this case, since the feed time of the electric current flowing in the emission layer of the pixels is longer than the conventional case, the range of changeably setting the pulse width of the modulation voltage $V_M$, that is, the effective variable range shown with a reference sign t in Figure 13(1) is wider, and the gradation display in multiple stages corresponding to the number of output bits of the counter 16 can be performed easily and precisely.

In addition, as the peak value of the electric current flowing in the emission layer of the pixels is controlled so as to be at a low value, the current value at the brightness in each gradation stage comes to be low, and the gradation in each stage can be stably displayed without any remarkable change in brightness due to error in the pulse width of the modulation voltage $V_M$.

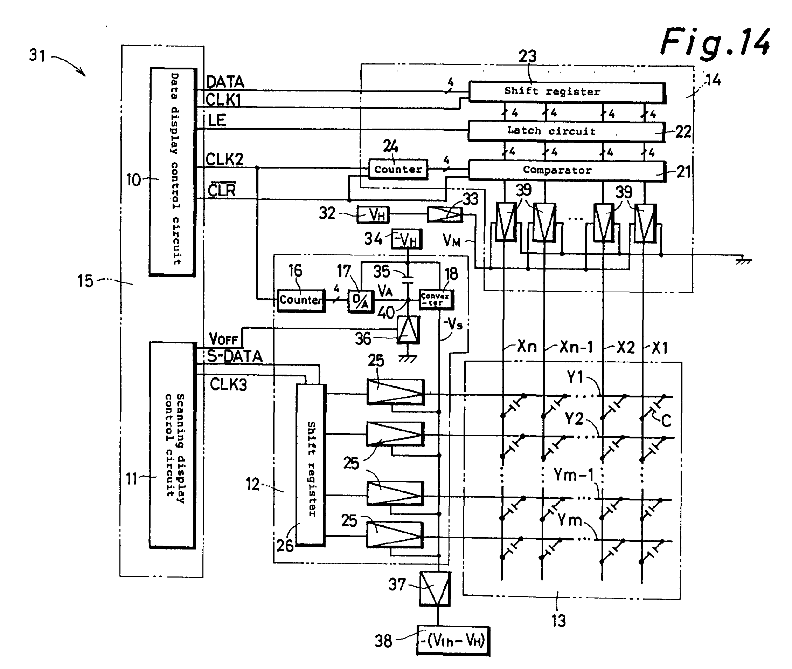

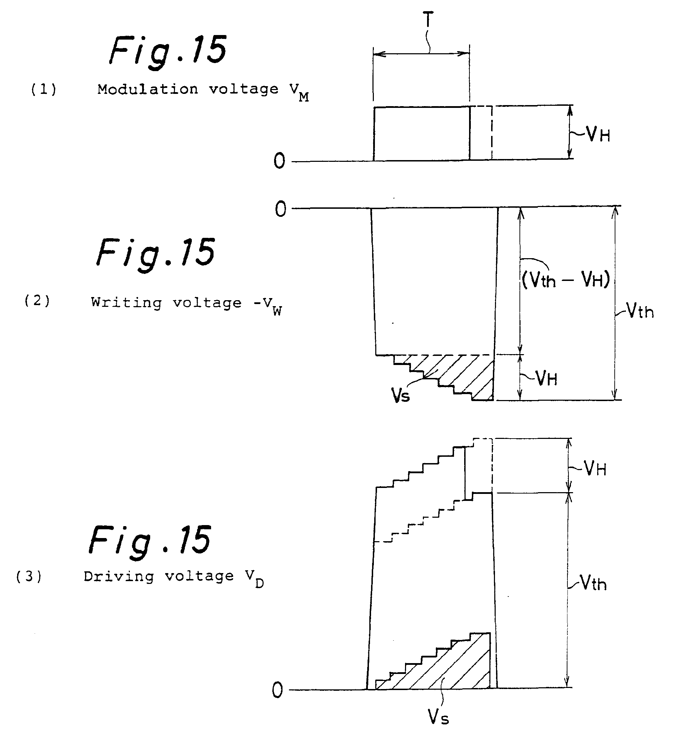

Figure 14 is a block diagram showing a display apparatus 31, wherein the staircase wave generating circuit shown in Figure 8 is composed as a part of the scanning electrode driving circuit 12, and the staircase wave voltage - $V_S$ obtained is used in superposition with the writing voltage - $V_W$ (= - $V_{th}$). Figure 15 is a waveform diagram showing the voltages applied in driving the gradation display.

In the data electrode driving circuit 14 of the display apparatus 31 shown in Figure 14, a modulation voltage $V_M$ is supplied to the output port 39 connected individually in correspondence with the data electrodes X1 to Xn from the power source circuit 32 through the modulation driver 33.

On the other hand, in the scanning electrode driving circuit 12, a voltage - ($V_{th}$ - $V_H$) is supplied to the output port 25 connected individually in correspondence with the scanning electrodes Y1 to Ym from the power source circuit 38 through the writing driver 37, and a staircase voltage - $V_S$ from the staircase wave generating circuit is superposed on the voltage - ($V_{th}$ - $V_H$) to make a voltage - $V_W$.

In the staircase wave generating circuit, the counter 16 counts based on the clock signal CLK2 from the data display control circuit 10, and supplies a binary code output of four bits to the D-A converter 17. To the D-A converter 17, a voltage - $V_H$ is supplied from the power source circuit 34, and the digital signal output from the counter 16 is converted into a staircase wave voltage $V_A$ and is supplied to the converter 18. A voltage - $V_H$ from the power source circuit 34 is also supplied to the converter 18, which may, for example, be composed of a MOS transistor of P-channel type or the like, and a staircase wave voltage - $V_S$ corresponding to the output voltage of the D-A converter 17 is supplied to each output port 25.

At the connection point 40 of the D-A converter 17 and the converter 18, a power source circuit 34 is connected through a capacitor 35 and is grounded through a switch circuit 36. In the switch circuit 36, a control signal $V_{OFF}$ is supplied from the scanning display control circuit 11.

Therefore, the converter 18 receives the charging voltage (the electric potential of the connection point 40) of the capacitor 35 and outputs a voltage - $V_S$ corresponding to that electric potential. The switch circuit 36 comes to be in an ON state by the control signal $V_{OFF}$ supplied from the scanning display control circuit 11, the connection point 40 is lowered to ground level, and the output voltage - $V_S$ from the converter 18 to the output port 25 is cut off.

In such a case, the modulation voltage $V_M$ is applied to the data electrode X (Figure 14) as a pulse having a pulse width T corresponding to the gradation display data as shown in Figure 15(1). On the other hand, the writing voltage $-V_W$ is applied, as shown in Figure 15(2), as a waveform composed of a negative staircase wave voltage $- V_S$ superposed on a specific voltage of $- (V_{th} - V_H)$ (where $V_H$ is the highest level of the staircase wave voltage $V_S$) to the scanning electrode Y (Figure 14). Therefore, the waveform of the driving voltage $V_D$ applied to the corresponding pixel when the scanning electrode Y is selected comes to be as shown in Figure 15(3).

In the waveform of the driving voltage $V_D$, the voltage area at the emission threshold voltage $V_{th}$ or higher voltages is equivalent to the superposing part of the staircase wave voltage $V_S$. In such case, although in the voltage area at the emission threshold voltage $V_{th}$ or lower voltages, a waveform different from the waveform shown in Figure 12(3) is generated in some parts, since in the voltage area at the emission threshold voltage $V_{th}$ or higher voltages contributing directly to the emission of light from the pixels, the waveforms are the same as those shown in Figure 12(3), no problem is caused.

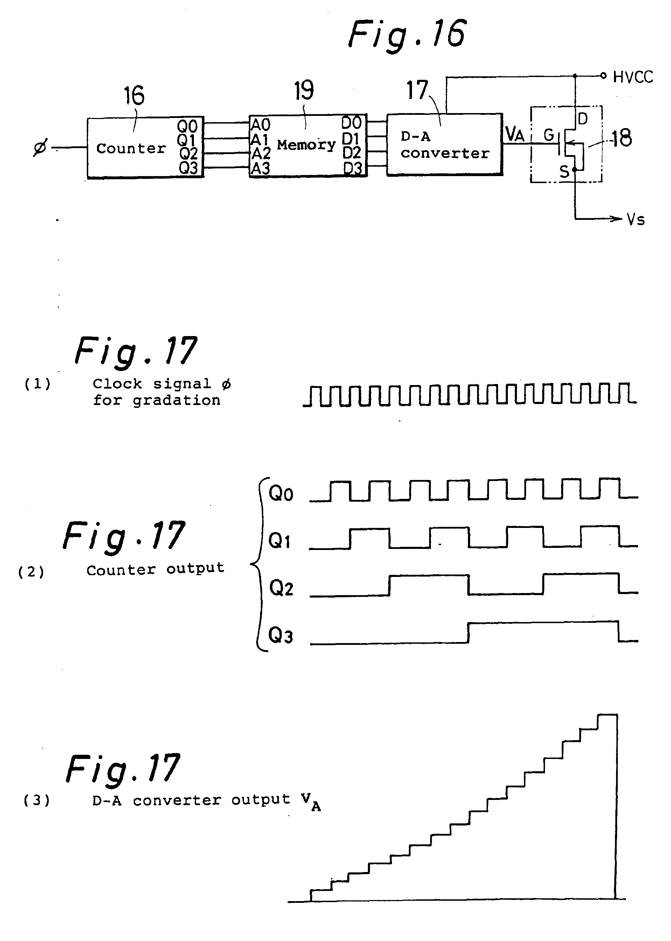

Figure 16 is a block diagram showing the basic composition of another staircase wave generating circuit having a different composition from that of the staircase wave generating circuit shown in Figure 8. In the circuit shown in Figure 16, a memory 19 is connected between the counter 16 and the D-A converter 17 of the circuit shown in Figure 8; otherwise the circuit composition is the same as in Figure 8.

The memory 19, realised by a read-only-memory (ROM), a read-write-memory (RWM), or the like, receives the outputs Q3, Q2, Q1, Q0 of the counter 16 as address-designating signals A3, A2, A1, A0, and functions to send data D3, D2, D1, D0 of four bits to the D-A converter 17 in the succeeding stage. In each storing area, data is priorly stored in order to output the desired staircase wave voltage VA corresponding to the outputs Q3, Q2, Q1, Q0 of the counter 16.

Figure 17 is a timing chart showing the operation of the staircase wave generating circuit shown in Figure 16. The clock signal $\phi$ for gradation shown in Figure 17(1) and the output waveform of the counter 16 shown in Figure 17(2) are the same as in the case of Figure 9.

In such a case, as the outputs Q3, Q2, Q1, Q0 of the counter 16 are entered into the D-A converter 17 by the memory 19 in such a form that they are converted to different data D3, D2, D1, D0 corresponding to the outputs from the D-A converter 17, for example, as shown in Figure 17(3), a staircase wave voltage $V_A$ different in the average changing rate of increase of the voltage level from the case shown in Figure 9(3) can be obtained. In other words, in this staircase wave generating circuit, by placing the memory 19, a desired staircase wave voltage $V_A$ can be generated. Such a composition using the memory 19 is effective especially in such a case that the brightness level of the emitted light is adjusted to be equally divided in consideration of the sight characteristics of the human eye for the purpose of gradation display.

In the embodiment described above, the case has been explained that the outputs of the counter 16 or the memory 19 are a number of bits, for example four bits, corresponding to that of the gradation display data DATA to output the staircase wave voltage $V_A$ of 16 steps from the D-A converter 17. However, the bit number is not limited in this way and may be set at a number according to the desired gradation degree of the gradation display.

In addition, with regard to the D-A converter 17, the case has been explained that the output voltage, that is the staircase wave voltage $V_A$, increases as the counted value of the counter 16 increases, but reversely, the D-A converter may have such a function that the staircase wave $V_A$ output from the D-A converter decreases as the counted value increases.

Although in the embodiments, the case of a writing voltage $V_W$ of negative polarity is explained, this invention is applicable equally to the case of a writing voltage $V_W$ of positive polarity. In other words, in the case of Figure 10, as a writing voltage $V_W$ of positive polarity from the power source 27a is supplied to the output port 25 through the writing driver 28a, the writing voltage $V_W$ is applied to scanning side electrodes Y1 - Ym in line-sequential manner according to each output port 25 which achieves ON action by means of the shift register 26.

Moreover, although in the foregoing embodiments, the invention has been explained with reference to the driving of an EL display device, the invention is not so limited in this respect but is also applicable in driving a plasma display, a liquid crystal display device, and other capacitive display devices.

The invention may be embodied in other specific forms without departing from the essential characteristics thereof. The present embodiments are therefore to be considered in all respects as illustrative and not restrictive, the scope of the invention being defined by the appended claims rather than by the foregoing description and all changes which come within the meaning and the range of equivalency of the claims are therefore intended to be embraced therein.

**Claims**

1. A method for driving a display device (13) comprising a dielectric display material (4) disposed between two opposed sets of electrodes (2, 5), the display device having an array of display elements each defined by the intersection of a pair of opposed electrodes comprising one from each set, the method comprising applying, across the pair of opposed electrodes of each display element, a driving pulse signal voltage ($V_D$) whose amplitude exceeds the display threshold voltage

($V_{th}$) of the dielectric display material and changes with time in a stepwise manner, and whose width is set according to a desired display gradation of said display element.

2. A method for driving a display device (13) according to claim 1, wherein the stepwise changes in amplitude of the driving pulse signal ($V_D$) is provided by a staircase wave ($V_S$) which is generated by (i) counting a clock signal (CLK2), (ii) converting the count to an analogue signal ($V_A$), and (iii) converting the analogue signal ($V_A$) to a level which is suitable for application to the electrodes of the display device (13).

3. A method for driving a display device (13) according to claim 2, wherein said count is processed prior to conversion to said analogue voltage ($V_A$) to vary the rate of change of voltage of the staircase wave ($V_S$ - Fig. 17(3)) in a predetermined manner.

4. A method for driving a display device (13) according to claim 2 or claim 3, wherein the width of the driving pulse signal ($V_D$) is set by counting said clock signal (CLK2).

5. A method for driving a display device (13) according to any of claims 1 to 4, wherein the display elements are driven by a modulation signal ($V_M$) applied sequentially to each of a plurality of data electrodes (Xl - Xn) constituting one of said sets of electrodes and by a writing signal ($V_W$) applied to a plurality of scanning electrodes (Yl - Ym) constituting the other of said sets of electrodes, the modulation signal ($V_M$) comprising a pulse whose width (T) determines the width of the driving pulse signal ($V_D$), and one or the other of the modulation signal ($V_M$) and the writing signal ($V_W$) comprising a staircase wave ($V_S$) which provides the stepwise change in amplitude of the driving pulse signal ($V_D$).

6. A method for driving a display device (13) according to claim 5, wherein the modulation signal ($V_M$ - Fig. 12(1)) applied to said data electrodes (Xl - Xn) comprises said staircase wave ($V_S$).

7. A method for driving a display device (13) according to claim 5, wherein the writing signal ($V_W$ - Fig. 15(2)) applied to said scanning electrodes (Yl - Ym) comprises said staircase wave ($V_S$).

8. Apparatus for driving a display device (13) comprising a dielectric display material (4) disposed between two opposed sets of electrodes (2, 5), the display device having an array of display elements each defined by the intersection of a pair of opposed electrodes comprising one from each set, the apparatus comprising means (12, 14) for generating, across the pair of opposed electrodes of each display element, a driving pulse signal voltage ($V_D$) whose amplitude exceeds the display threshold voltage ($V_{th}$) of the dielectric display material and changes with time in a stepwise manner, and whose width is set according to input data (DATA) defining a desired display gradation of said display element.

9. Apparatus for driving a display device (13) according to claim 8, wherein driving pulse signal the generating means (12,14) includes a circuit for generating a staircase wave ($V_S$) which provides the stepwise change in amplitude of the driving pulse signal ($V_D$), said circuit comprising a counter (16) for counting a clock signal (CLK2), a D-A converter (17) for converting the count to an analogue signal ($V_A$), and a converter (18) for converting the analogue signal ($V_A$) to a level which is suitable for application to the electrodes of the display device (13).

10. Apparatus for driving a display device (13) according to claim 9, wherein the staircase wave generating circuit (16, 17, 18) further comprises a conversion circuit (19), connected between the output of the counter (16) and the input of the D-A converter (17), for determining the rate of change of voltage of the staircase wave ($V_S$).

11. Apparatus for driving a display device (13) according to claim 10, wherein the conversion circuit (19) has a memory function by which data (D0 - D3) having a predetermined relationship with the input count are output to the D-A converter.

12. Apparatus for driving a display device (13) according to any of claims 8 to 11, wherein the driving pulse signal generating means (12, 14) comprises:

a scanning electrode driving circuit (12) for generating a writing signal ($V_W$) to be applied sequentially to each of a plurality of scanning electrodes (Yl - Ym) constituting one of said sets of electrodes;

a data electrode driving circuit (14) for generating a modulation signal ($V_M$) to be applied to each of a plurality of data electrodes (Xl - Xn) constituting the other of said sets of electrodes, said modulation signal ($V_M$) comprising a pulse whose width (T) determines the width of the driving pulse signal ($V_D$); and

a staircase wave generating circuit (16, 17, 18) included in one or the other of said scanning electrode driving circuit (12) and said data electrode driving circuit (14) for generating a staircase wave ($V_S$) in said writing signal ($V_W$) or in said modulation signal ($V_M$) respectively to provide the stepwise change in amplitude of the driving pulse signal ($V_D$).

13. Apparatus for driving a display device (13) according to claim 12, wherein the staircase wave generating circuit (16, 17, 18) generates a staircase wave ($V_S$) whose steps are synchronised with a clock signal (CLK2), said data electrode driving circuit (14) including means (24) for counting said clock signal (CLK2) to determine the pulse width (T) of the modulation signal ($V_M$).

14. Apparatus for driving a display device (13) according to claim 13, wherein the data electrode driving circuit (14) comprises:
a circuit (22) for extracting the input data (DATA) relating to the desired display gradation of the display elements defined by the intersection of a selected scanning electrode (YI - Ym) and each of the data electrodes (XI - Xn);
a comparator (21) for comparing, in respect of each of those display elements, the input data (DATA) and the output signal of said counting means (24), to determine the pulse width (T) of the modulation signal ($V_M$) to be applied to each data electrode (XI - Xn); and
a modulation signal forming circuit (39) for forming and supplying to each data electrode (XI - Xn) a respective modulation signal ($V_M$) having the required pulse width (T).

15. Apparatus for driving a display device (13) according to claim 14, wherein said staircase wave generating circuit (16, 17, 18) is included in said data electrode driving circuit (14), and said modulation signal forming circuit (39) forms each said respective modulation signal ($V_M$) by outputting the staircase wave ($V_S$) for a time determined by the output of said comparator (21).

16. Apparatus for driving a display device (13) according to claim 14, wherein said staircase wave generating circuit (16, 17, 18) is included in said scanning electrode driving circuit (12), and said modulation signal forming circuit (39) forms each said respective modulation signal ($V_M$) by outputting a predetermined voltage ($V_H$) for a time determined by the output of said comparator (21).

**Patentansprüche**

1. Verfahren zum Treiben einer Displayeinrichtung (13) mit einem dielektrischen Displaymaterial (4), das zwischen zwei einander gegenüberstehenden Sätzen von Elektroden (2, 5) angeordnet ist, wobei die Displayeinrichtung ein Array von Anzeigeelementen aufweist, die jeweils durch die Schnittstelle eines Paars einander gegenüberstehender Elektroden, jeweils einer aus jedem Satz, festgelegt werden, welches Verfahren folgendes umfaßt: Anlegen einer Treiberimpulssignal-Spannung ($V_D$) an die einander gegenüberstehenen Elektroden jedes Anzeigeelements, deren Amplitude die Anzeigeschwellenspannung ($V_{th}$) des dielektrischen Displaymaterials überschreitet und sich zeitlich schrittweise ändert, und deren Breite abhängig von der gewünschten Anzeigegraustufe des Anzeigeelements eingestellt wird.

2. Verfahren zum Treiben einer Displayeinrichtung (13) nach Anspruch 1, bei der die stufenweise Änderung der Amplitude des Treiberimpulssignals ($V_D$) durch ein Treppensignal ($V_S$) geliefert wird, das dadurch erzeugt wird, daß (i) ein Taktsignal (CLK2) gezählt wird, (ii) der Zählwert in ein analoges Signal ($V_A$) umgesetzt wird und (iii) das analoge Signal ($V_A$) in einen Pegel umgesetzt wird, der zum Anlegen an die Elektroden der Displayeinrichtung (13) geeignet ist.

3. Verfahren zum Treiben einer Displayeinrichtung (13) nach Anspruch 2, bei der der Zählwert vor dem Umsetzen in die analoge Spannung ($V_A$) verarbeitet wird, um die Änderungsrate der Spannung des Treppensignals ($V_S$ - Fig. 17 (3)) auf vorgegebene Weise zu ändern.

4. Verfahren zum Treiben einer Displayeinrichtung (13) nach Anspruch 2 oder Anspruch 3, bei der die Breite des Treiberimpulssignals ($V_d$) dadurch eingestellt wird, daß das Taktsignal (CLK2) gezählt wird.

5. Verfahren zum Treiben einer Displayeinrichtung (13) nach einem der Ansprüche 1 bis 4, bei dem die Anzeigeelemente durch ein Modulationssignal ($V_M$) betrieben werden, das sequentiell an jede von mehreren Datenelektroden (X1 - Xn) gelegt wird, die den einen der Elektrodensätze bilden, und durch ein Schreibsignal ($V_W$), das an mehrere Abrasterelektroden (Y1 - Ym) angelegt wird, die den anderen Elektrodensatz bilden, wobei das Modulationssignal ($V_M$) einen Impuls aufweist, dessen Breite (T) die Breite des Treiberimpulssignals ($V_D$) festlegt, und wobei entweder das Modulationssignal ($V_M$) oder das Schreibsignal ($V_W$) ein Treppensignal ($V_S$) aufweist, das für eine schrittweise Änderung der Amplitude des Treiberimpulssignals ($V_D$) sorgt.

6. Verfahren zum Treiben einer Displayeinrichtung (13) nach Anspruch 5, bei der das an die Datenelektroden (X1 - Xn) angelegte Modulationssignal ($V_M$ - Fig. 12 (1)) das Treppensignal ($V_S$) enthält.

7. Verfahren zum Treiben einer Displayeinrichtung (13) nach Anspruch 5, bei der das an die Abrasterelektroden (Y1 - Ym) angelegte Schreibsignal ($V_W$ - Fig. 15 (2)) das Treppensignal ($V_S$) enthält.

8. Vorrichtung zum Treiben einer Displayeinrichtung (13) mit einem dielektrischen Displaymaterial (4), das zwischen zwei sich einander gegenüberstehenden Sätzen von Elektroden (2, 5) angeordnet ist, wobei die Displayeinrichtung ein Array von Displayelementen aufweist, die jeweils durch die Schnittstelle eines Paars sich einander gegenüberstehender Elektroden, mit jeweils einer aus jedem Satz, definiert werden, welche Vorrichtung eine Einrichtung (12, 14) zum Erzeugen einer an das Paar sich einander gegenüberstehender Elektroden jedes Anzeigeelements anzulegenden Treiberimpulssignal-Spannung ($V_D$) aufweist, deren Amplitude die Anzeigeschwellenspannung ($V_{th}$) des dielektrischen Displaymaterials überschreitet und sich zeitlich schrittweise ändert, und deren Breite abhängig von einem Eingangsdatenwert (DATEN) festgelegt wird, der eine gewünschte Anzeigegraustufe für das Anzeigelement festlegt.

9. Vorrichtung zum Treiben einer Displayeinrichtung (13) nach Anspruch 8, bei der die Treiberimpulssignal-Erzeugungseinrichtung (12, 14) eine Schaltung zum Erzeugen eines Treppensignals ($V_S$) beinhaltet, die die die schrittweise Amplitudenänderung des Treiberimpulssignals ($V_D$) erzeugt, wobei die Schaltung einen Zähler (16) zum Zählen eines Taktsignals (CLK2), einen D/A-Umsetzer (17) zum Umsetzen des Zählwerts in ein analoges Signal ($V_A$) und einen Wandler (18) zum Umwandeln des analogen Signals ($V_A$) auf einen Pegel, der zum Anlegen an die Elektroden der Displayeinrichtung (13) geeignet ist, aufweist.

10. Vorrichtung zum Treiben einer Displayeinrichtung (13) nach Anspruch 9, bei der die Treppensignal-Erzeugungsschaltung (16, 17, 18) ferner eine Wandlerschaltung (19) aufweist, die zwischen den Ausgang des Zählers (16) und den Eingang des D/A-Umsetzers (17) geschaltet ist, um die Änderungsrate der Spannung des Treppensignals ($V_S$) zu bestimmen.

11. Vorrichtung zum Treiben einer Displayeinrichtung (13) nach Anspruch 10, bei der die Wandlerschaltung (19) eine Speicherfunktion aufweist, durch die Daten (D0 - D3) mit vorgegebener Beziehung zum eingegebenen Zählwert an den D/A-Umsetzer ausgegeben werden.

12. Vorrichtung zum Treiben einer Displayeinrichtung (13) nach einem der Ansprüche 8 bis 11, bei der die Treiberimpulssignal-Erzeugungseinrichtung (12, 14) folgendes aufweist:
   - eine Abrasterelektroden-Treiberschaltung (12) zum Erzeugen eines Schreibsignals ($V_W$), das sequentiell an jede von mehreren Abrasterelektroden (Y1 - Ym) zu legen ist, die einen der Elektrodensätze bilden;
   - eine Datenelektroden-Treiberschaltung (14) zum Erzeugen eines Modulationssignals ($V_M$), das an jede der mehreren Datenelektroden (X1 - Xn) zu legen ist, die den anderen Elektrodensatz bilden, wobei das Modulationssignal ($V_M$) einen Impuls enthält, dessen Breite (T) die Breite des Treiberimpulssignals ($V_D$) bestimmt; und
   - eine Treppensignal-Erzeugungsschaltung (16, 17, 18), die entweder in der Abrasterelektroden-Treiberschaltung (12) oder der Datenelektroden-Treiberschaltung (14) enthalten ist, um im Schreibsignal ($V_W$) bzw. im Modulationssignal ($V_M$) ein Treppensignal ($V_S$) zu erzeugen, um die schrittweise Änderung der Amplitude des Treiberimpulssignals ($V_D$) zu schaffen.

13. Vorrichtung zum Treiben einer Displayeinrichtung (13) nach Anspruch 12, bei der die Treppensignal-Erzeugungsschaltung (16, 17, 18) ein Treppensignal ($V_S$) erzeugt, dessen Stufen mit einem Taktsignal (CLK2) synchronisiert sind, wobei die Datenelektroden-Treiberschaltung (14) eine Einrichtung (24) zum Zählen des Taktsignals (CLK2) aufweist, um die Impulsbreite (T) des Modulationssignals ($V_M$) zu bestimmen.

14. Vorrichtung zum Treiben einer Displayeinrichtung (13) nach Anspruch 13, bei der die Datenelektroden-Treiberschaltung (14) folgendes aufweist:
   - eine Schaltung (22) zum Entnehmen der Eingangsdatenwerte (DATEN) betreffend die gewünschte Anzeigegraustufe der Anzeigeelemente, wie sie durch die Schnittpunkte zwischen einer ausgewählten Abrasterelektrode (Y1 - Ym) und jede der Datenelektroden (X1 - Xn) festgelegt werden;
   - einen Komparator (21), um für jedes der Anzeigeelemente den Eingangsdatenwert (DATEN) und das Ausgangssignal der Zähleinrichtung (24) zu vergleichen, um die Impulsbreite (T) des an jede Datenelektrode (X1 - Xn) anzulegenden Modulationssignals ($V_M$) zu bestimmen; und

- eine Modulationssignal-Erstellschaltung (39) zum Erstellen eines jeweiligen Modulationssignals ($V_M$) mit der erforderlichen Impulsbreite (T) und zum Ausgeben desselben an jede Datenelektrode (X1 - Xn).

15. Vorrichtung zum Treiben einer Displayeinrichtung (13) nach Anspruch 14, bei der die Treppensignal-Erzeugungsschaltung (16, 17, 18) in der Datenelektroden-Treiberschaltung (14) enthalten ist und die Modulationssignal-Erstellschaltung (39) das jeweilige Modulationssignal ($V_M$) dadurch erstellt, daß sie das Treppensignal ($V_S$) für eine Zeit ausgibt, die durch das Ausgangssignal des Komparators (21) bestimmt wird.

16. Vorrichtung zum Treiben einer Displayeinrichtung (13) nach Anspruch 14, bei der die Treppensignal-Erzeugungsschaltung (16, 17, 18) in der Abrasterelektroden-Treiberschaltung (12) enthalten ist und die Modulationssignal-Erstellschaltung (39) das jeweilige Modulationssignal ($V_M$) dadurch erstellt, daß sie die vorgegebene Spannung ($V_H$) für eine Zeit ausgibt, die durch das Ausgangssignal des Komparators (21) bestimmt wird.

## Revendications

1. Procédé de pilotage d'un dispositif d'affichage (13) comprenant une matière d'affichage diélectrique (4) disposée entre deux ensembles opposés d'électrodes (2, 5), le dispositif d'affichage comportant une matrice d'éléments d'affichage définis chacun par l'intersection d'une paire d'électrodes opposées comprenant une électrode de chaque ensemble, le procédé consistant à appliquer, aux bornes de la paire d'électrodes opposées de chaque élément d'affichage, une tension de signal impulsionnel de pilotage ($V_D$) dont l'amplitude dépasse la tension de seuil d'affichage ($V_{th}$) de la matière d'affichage diélectrique et varie avec le temps en échelon, et dont la largeur est fixée en fonction d'une gradation d'affichage voulue pour ledit élément d'affichage.

2. Procédé de pilotage d'un dispositif d'affichage (13) selon la revendication 1, dans lequel la variation en échelon ode l'amplitude du signal impulsionnel de pilotage ($V_D$) est fournie par une onde en escalier ($V_s$) qui est générée (i) par comptage d'un signal d'horloge (CLK2), (ii) par conversion du comptage en un signal analogique ($V_A$), et (iii) par conversion du niveau du signal analogique ($V_A$) en un niveau qui convient à une application aux électrodes du dispositif d'affichage (13).

3. Procédé de pilotage d'un dispositif d'affichage (13) selon la revendication 2, dans lequel ledit comptage est traité avant la conversion en ladite tension analogique ($V_A$) pour modifier le taux de variation de la tension de l'onde en escalier ($V_s$ - Figure 17(3)) d'une manière prédéterminée.

4. Procédé de pilotage d'un dispositif d'affichage (13) selon la revendication 2 ou la revendication 3, dans lequel la largeur du signal impulsionnel de pilotage ($V_D$) est fixée par comptage dudit signal d'horloge (CLK2).

5. Procédé de pilotage d'un dispositif d'affichage (13) selon l'une quelconque des revendications 1 à 4, dans lequel les éléments d'affichage sont pilotés par un signal de modulation ($V_M$) appliqué séquentiellement à chaque électrode d'une multiplicité d'électrodes de données (X1 à Xn) constituant l'un desdits ensembles d'électrodes et par un signal d'écriture ($V_w$) appliqué à une multiplicité d'électrodes de balayage (Y1 à Ym) constituant l'autre desdits ensembles d'électrodes, le signal de modulation ($V_M$) comprenant une impulsion dont la largeur (T) détermine la largeur du signal impulsionnel de pilotage ($V_D$), et l'un ou l'autre du signal de modulation ($V_M$) et du signal d'écriture ($V_w$) comprenant une onde en escalier ($V_s$) qui fournit la variation en échelon de l'amplitude du signal impulsionnel de pilotage ($V_D$).

6. Procédé de pilotage d'un dispositif d'affichage (13) selon la revendication 5, dans lequel le signal de modulation ($V_M$ - Figure 12(1)) appliqué auxdites électrodes de données (X1 à Xn) comprend ladite onde en escalier ($V_s$).

7. Procédé de pilotage d'un dispositif d'affichage (13) selon la revendication 5, dans lequel le signal d'écriture ($V_w$ - figure 15(2)) appliqué auxdites électrodes de balayage (Y1 à Ym) comprend ladite onde en escalier ($V_s$).

8. Appareil de pilotage d'un dispositif d'affichage (13) comprenant une matière d'affichage diélectrique (4) disposée entre deux ensembles opposés d'électrodes (2, 5), le dispositif d'affichage comportant une matrice d'éléments d'affichage définis chacun par l'intersection d'une paire d'électrodes opposées comprenant une électrode de chaque ensemble, l'appareil comprenant des moyens (12, 14) pour générer, aux bornes de la paire d'électrodes opposées de chaque élément d'affichage, une tension de signal impulsionnel de pilotage ($V_D$) dont l'amplitude dépasse la tension de seuil d'affichage ($V_{th}$) de la matière

d'affichage diélectrique et varie avec le temps en échelon, et dont la largeur est fixée en fonction de données d'entrée (DATA) définissant une gradation d'affichage voulue dudit élément d'affichage.

9. Appareil de pilotage d'un dispositif d'affichage (13) selon la revendication 8, dans lequel lesdits moyens de génération de signal impulsionnel de pilotage (12, 14) comprennent un circuit pour générer une onde en escalier ($V_s$) qui fournit la variation en échelon de l'amplitude du signal impulsionnel de pilotage ($V_D$), ledit circuit comprenant un compteur (16) pour compter un signal d'horloge (CLK2), un convertisseur numérique-analogique (17) pour convertir le comptage en un signal analogique ($V_A$), et un convertisseur (18) pour convertir le niveau du signal analogique ($V_A$) en un niveau qui convient à une application aux électrodes du dispositif d'affichage (13).

10. Appareil de pilotage d'un dispositif d'affichage (13) selon la revendication 9, dans lequel le circuit de génération d'onde en escalier (16, 17, 18) comprend en outre un circuit de conversion (19), relié entre la sortie du compteur (16) et l'entrée du convertisseur numérique-analogique (17), pour déterminer le taux de variation de la tension de l'onde en escalier ($V_s$).

11. Appareil de pilotage d'un dispositif d'affichage (13) selon la revendication 10, dans lequel le circuit de conversion (19) comporte une fonction de mémoire par laquelle des données (D0 à D3) ayant une relation prédéterminée avec le comptage d'entrée sont envoyées au convertisseur numérique-analogique.

12. Appareil de pilotage d'un dispositif d'affichage (13) selon l'une quelconque des revendications 8 à 11, dans lequel les moyens de génération de signal impulsionnel de pilotage (12, 14) comprennent:

un circuit de pilotage d'électrodes de balayage (12) pour générer un signal d'écriture ($V_w$) destiné à être appliqué séquentiellement à chaque électrode d'une multiplicité d'électrodes de balayage (Y1 à Ym) constituant l'un desdits ensembles d'électrodes;

un circuit de pilotage d'électrodes de données (14) pour générer un signal de modulation ($V_M$) destiné à être appliqué à chaque électrode d'une multiplicité d'électrodes de données (X1 à Xn) constituant l'autre desdits ensembles d'électrodes, ledit signal de modulation ($V_M$) comprenant une impulsion dont la largeur (T) détermine la largeur du signal impulsionnel de pilotage ($V_D$); et

un circuit de génération d'onde en escalier (16, 17, 18) inclus dans l'un ou l'autre dudit circuit de pilotage d'électrodes de balayage (12) et dudit circuit de pilotage d'électrodes de données (14) pour générer une onde en escalier ($V_s$) dans ledit signal d'écriture ($V_w$) ou dans ledit signal de modulation ($V_M$), respectivement, pour fournir la variation en échelon de l'amplitude du signal impulsionnel de pilotage ($V_D$).

13. Appareil de pilotage d'un dispositif d'affichage (13) selon la revendication 12, dans lequel le circuit de génération d'onde en escalier (16, 17, 18) génère une onde en escalier ($V_s$) dont les échelons sont synchronisés avec un signal d'horloge (CLK2), ledit circuit de pilotage d'électrodes de données (14) comportant des moyens (24) pour compter ledit signal d'horloge (CLK2) pour déterminer la largeur d'impulsion (T) du signal de modulation ($V_M$).

14. Appareil de pilotage d'un dispositif d'affichage (13) selon la revendication 13, dans lequel le circuit de pilotage d'électrodes de données (14) comprend:

un circuit (22) pour extraire les données d'entrée (DATA) se rapportant à la gradation d'affichage voulue pour les éléments d'affichage définis par l'intersection d'une électrode de balayage sélectionnée (Y1 à Ym) et de chacune des électrodes de données (X1 à Xn);

un comparateur (21) pour comparer, relativement à chacun de ces éléments d'affichage, les données d'entrée (DATA) et le signal de sortie desdits moyens de comptage (24), pour déterminer la largeur d'impulsion (T) du signal de modulation ($V_M$) à appliquer à chaque électrode de données (X1 à Xn); et

un circuit de formation de signal de modulation (39) pour former et fournir à chaque électrode de données (X1 à Xn) un signal de modulation respectif ($V_M$) ayant la largeur d'impulsion requise (T).

15. Appareil de pilotage d'un dispositif d'affichage (13) selon la revendication 14, dans lequel ledit circuit de génération d'onde en escalier (16, 17, 18) est inclus dans ledit circuit de pilotage d'électrodes de données (14), et ledit circuit de formation de signal de modulation (39) forme chacun desdits signaux de modulation respectifs ($V_M$) en délivrant en sortie l'onde en escalier ($V_s$) pendant une période de temps déterminée par la sortie dudit comparateur (21).

16. Appareil de pilotage d'un dispositif d'affichage (13) selon la revendication 14, dans lequel ledit circuit de génération d'onde en escalier (16, 17, 18) est inclus dans ledit circuit de pilotage d'électrodes de balayage (12), et ledit circuit de formation de signal de modulation (39) forme chacun desdits signaux de modulation respectifs ($V_M$) en délivrant en sortie une tension prédéterminée ($V_H$) pendant une période de temps déterminée par la sortie dudit comparateur (21).

EP 0 381 479 B1

# Fig.1 Prior Art

# Fig.2 Prior Art

15

# Fig.3  Prior  Art

# Fig.4  Prior  Art

16

*Fig.5(1)Prior Art*  V<sub>ON</sub>

*Fig.5(2)Prior Art*  V<sub>OFF</sub>

*Fig.5(3)Prior Art*  V<sub>R</sub>

*Fig.6(1)Prior Art*  V<sub>ON</sub>

*Fig.6(2)Prior Art*  V<sub>OFF</sub>

*Fig.6(3)Prior Art*  V<sub>R</sub>

# Fig.7

# Fig.8

Fig. 9

(1) Clock signal $\phi$
for gradation

Fig. 9

(2) Counter
output

Q0

Q1

Q2

Q3

Fig. 9

(3) D-A converter
output $V_A$

*Fig.10*

EP 0 381 479 B1

Fig.11 (1) $\overline{CLR}$

Fig.11 (2) CLK2

Fig.11 (3) X1

Fig.11 (4) X2

Fig.11 (5) Xn-1

Fig.11 (6) Xn

*Fig.12*

(1)    Modulation voltage $V_M$

*Fig.12*

(2)    Writing voltage $-V_W$

*Fig.12*

(3)    Driving voltage $V_D$

*Fig.13*
(1)

t

T

$V_H$

ℓ1

$V_{th}$

*Fig.13*
(2)

*Fig.13*
(3)

Fig.14

EP 0 381 479 B1

*Fig.15*

(1)  Modulation voltage $V_M$

*Fig.15*

(2)  Writing voltage $-V_W$

*Fig.15*

(3)  Driving voltage $V_D$

# Fig. 16

# Fig. 17

(1) Clock signal φ for gradation

# Fig. 17

(2) Counter output

Q0
Q1
Q2
Q3

# Fig. 17

(3) D-A converter output $V_A$